# EUROPÄISCHE PATENTSCHRIFT

(11) **EP 1 132 740 B1**
(45) Veröffentlichungstag und Bekanntmachung des Hinweises auf die Patenterteilung: **25.06.2008**
(21) Anmeldenummer: 01104221.5
(22) Anmeldetag: 22.02.2001
(51) Int. Cl.: G01P 1/12, G07C 5/06, G07C 7/00, G01D 15/32

(54) **Halter für ein Trennmesser und Vorkehrungen zum Befestigen des Halters in einem Fahrtschreiber**
Holder for a ripping knife and means for fastening the holder in a tachograph
Support pour un couteau de sectionnement et moyens de fixation du support dans un tachygraphe

(30) Priorität: 28.02.2000 DE 20003672 U
(43) Veröffentlichungstag der Anmeldung: 12.09.2001
(73) Patentinhaber: Continental Automotive GmbH, 30165 Hannover (DE)
(72) Erfinder: Wahler, Torsten, 78073 Bad Dürrheim (DE)

(56) Entgegenhaltungen:
- DE-A- 19 807 219
- GB-A- 529 038
- US-A- 3 259 906

## Beschreibung

Die Erfindung betrifft einen Halter für ein Trennmesser und Vorkehrungen zum Befestigen des Halters in einem Fahrtschreiber, in welchem für ein abschnittweises, zeitlich ununterbrochenes Registrieren von einem Laufwerk uhrzeitrichtig angetriebene Diagrammscheibenbündel Anwendung finden, in welchem eine Auflage vorgesehen ist, welche als Registrierunterlage dient und in welchem die einzelnen durch Verbindungsstreifen an einer Grundscheibe befestigten Diagrammscheiben nach und nach von dem Diagrammscheibenbündel abgetrennt werden, indem das Trennmesser im Verlauf des Registrierens die Verbindungsstreifen durchschneidet.

Bekanntlich werden Diagrammscheibenbündel vorteilhaft dann verwendet, wenn ein in seinem Zusammenhang interessierender Vorgang über einen längeren Zeitbereich erfaßt oder eine bessere Auflösung der Registrierungen innerhalb eines bestimmten zeitlichen Registrierbereichs erzielt werden sollen, als dies mit einer einzelnen in ihrer Registrierkapazität relativ eng begrenzten Diagrammscheibe möglich wäre. Ein bevorzugtes Anwendungsbeispiel für derartige Diagrammscheibenbündel, bei denen die einzelnen Diagrammscheiben jeweils mit einem sektorförmigen Ausschnitt versehen und gestaffelt zueinander angeordnet sind, stellen Fahrtschreiber dar, deren Bedienung durch Einlegen von Diagrammscheibenbündeln, die beispielsweise eine wöchentliche Registrierung gestatten, wesentlich vereinfacht wird.

Die mit einem Diagrammscheibenbündel angestrebte ununterbrochene Registrierung über einen größeren Zeitabschnitt wird dadurch erzielt, dass die Registrierorgane des Fahrtschreibers nach nahezu einer Umdrehung infolge der sektorförmigen Ausschnitte von einer Diagrammscheibe auf die im Bündel nächstfolgende herabgleiten. Die weitere Registrierung erfolgt somit ohne Zeitversatz auf einer neuen, noch unbeschriebenen Diagrammscheibe, während die beschriebene Diagrammscheibe, die beispielsweise durch einen Papierstreifen mit der im Registrierablauf letzten Diagrammscheibe oder einer Grundscheibe verbunden ist, im Laufe der Weiterbewegung des Diagrammscheibenbündels mittels eines Trennmessers, welches ebenfalls in den Ausschnitt der beschriebenen Diagrammscheibe einfällt und dann zwischen der beschriebenen und der nächstfolgenden Diagrammscheibe wirksam ist, von dem Diagrammscheibenbündel abgetrennt wird. Im weiteren Verlauf führt die Friktion der abgetrennten Diagrammscheibe mit dem verbleibenden und weiter umlaufenden Restbündel bzw. mit dessen mit der Grundscheibe fest verbundenen Laufbuchse die abgetrennte Diagrammscheibe gegen einen ortsfesten Anschlag. Solche Vorrichtungen sind z.B. in DE 198 07 219 A oder US--A-3 259 906 offenbart.

Bei diesem Registrierkonzept kommt dem Trennmesser und dessen Befestigung eine nicht unwesentliche Bedeutung zu, das heißt, dass abgesehen von einer ausreichenden Standzeit des Trennmessers eine absolut sichere und biegesteife Befestigung gewährleistet sein muß, damit ein stets gleichbleibender Schnittwinkel zwischen der Schneide des Trennmessers und dem Verbindungsstreifen der Diagrammscheibenbündel gegeben ist und dadurch Drehmomentschwankungen oder ein Stillstand des Laufwerkes vermieden werden. Aus diesem Grunde wurde bis heute der Halter des Trennmessers aus Druckguss hergestellt und mit einem als Registrierunterlage dienenden Bauteil des Fahrtschreibers verschraubt oder vernietet. Bekanntlich handelt es sich bei diesem Bauteil bei herkömmlichen Fahrtschreibern um den frontseitig aufklappbaren, topförmig ausgebildeten Deckel. Die Befestigung des Trennmessers an einem derartigen Halter erfolgte ebenfalls durch Nieten, wobei im Allgemeinen ein Nachjustieren erforderlich ist. Das heißt, die herkömmliche Herstellung des Halters und die Befestigung des Trennmessers am Halter sowie die Befestigung des Halters im Fahrtschreiber erfordern einen hohen Herstellungs- und Montageaufwand abgesehen davon, dass der beispielsweise aus Zinkdruckguss hergestellte Halter nachbearbeitet und lackiert werden muss.

Die der Erfindung zugrunde liegende Aufgabe besteht somit darin, unter Beibehaltung der erforderlichen Befestigungssicherheit einer Trennmesser-Baugruppe sowie der erforderlichen Steifigkeit der Halterung des Trennmessers an sich, den Herstell- und Montageaufwand für die Trennmesser-Baugruppe erheblich zu reduzieren.

Die Lösung dieser Aufgabe sieht vor, dass der Halter aus einem der Befestigung des Trennmessers dienenden Tragarm, wenigstens einem im wesentlichen parallel zu dem Tragarm ausgerichteten Befestigungsschenkel und einem Tragarm und Befestigungsschenkel verbindenden Steg gebildet ist, dass der Halter spritzgießtechnisch aus einem Kunststoff hergestellt ist und dass an dem Befestigungsschenkel und an der Auflage einen gegenseitigen Formschluß ermöglichende Strukturen derart ausgebildet sind, dass der Halter mit der Auflage durch ein parallel zur Registrierebene erfolgendes Zusammenfügen verbindbar ist.

Vorteilhafte Ausgestaltungen der Erfindung gehen aus den Untersprüchen hervor.

Die erfindungsgemäße Lösung weist durch die spritzgießtechnische Herstellung des Halters gegenüber der bisherigen Herstellung einen erheblichen Fertigungsvorteil insofern auf als der Halter montierfertig und zusätzlich in einer gegenüber der Auflage kontrastierenden Farbe herstellbar ist. Wird das Trennmesser unter Anwendung der Einlegetechnik in den Halter spritzgießtechnisch eingebettet und nicht nachträglich am Halter befestigt, so läßt sich darüberhinaus die Trennmesser-Baugruppe unmittelbar der Spritzgießmaschine entnehmen und durch die an dem Halter und an der Auflage ausgebildeten Strukturen formschlüssig und spielfrei mit der Auflage verbinden. Dabei ist durch die gewählte Fügeverbindung, das heißt durch das wechselweise, verschachtelte Eingreifen des Befestigungsschenkels in in der Auflage vorgesehene Aussparungen eine hohe Sitzgenauigkeit der Trennmesser-Baugruppe gewährleistet. Ferner erfordern, was insbesondere für flache mit einer Schublade ausgerüstete Fahrtschreiber von Bedeutung ist, die Befestigungsmittel praktisch keine zusätzliche Bauhöhe. Zusätzlich zur Fügeverbindung zwischen Halter und Auflage vorgesehene, gegeneinander wirkende Rastverbindungsmittel dienen der radialen Sicherung der Trennmesser-Baugruppe. Die Rastverbindungsmittel können mit Sollbruchstellen versehen sein, so dass sie eine Plombierfunktion ausüben. Vorteilhaft ist außerdem, dass an dem Halter ein Prisma angeformt ist, dessen First im Zusammenwirken mit einem an der Auflage ausgebildeten Schlitz bei unterschiedlicher Farbgebung von Halter und Auflage ohne weiteren Fertigungsaufwand eine Markierung für das uhrzeitrichtige Ausrichten der Diagrammscheibenbündel bildet.

Selbstverständlich kann die erfindungsgemäße Lösung auch bei einem Fahrtschreiber mit einem aufklappbaren Deckel realisierrt werden, wenn der Boden des Deckels in geeigneter Weise und von außen zugänglich ausgebildet wird. Ein wesentlicher Vorteil, den die Erfindung bietet, ist insbesondere auch darin zu sehen, dass sie eine schnelle und werkzeuglose Montage der Trennmesser-Baugruppe ohne Nacharbeit oder Justieraufwand ermöglicht.

Im folgenden sei die Erfindung anhand der beigefügten Zeichnungen näher erläutert. Es zeigen:
- Figur 1: eine der Übersicht dienende Perspektivdarstellung eines Fahrtschreibers mit einer sogenannten 7-Tage-Registriereinrichtung, wobei diese in einer dem Wechseln der verwendeten Diagrammscheibenbündel dienenden Schublade angeordnet ist,
- Figur 2: eine Draufsicht eines Diagrammscheibenbündels mit einer Darstellung der Staffelung der einzelnen Diagrammscheiben innerhalb des Bündels,
- Figur 3: eine Untersicht des Halters bzw. der Trennmesser-Baugruppe,
- Figur 4: eine Draufsicht des von dem Trennmesser und dessen Tragarm freigeschnittenen Befestigungsschenkels des Halters,
- Figur 5: eine Seitenansicht des Halters bzw. der Trennmesser-Baugruppe in der in Figur 4 gezeigten Pfeilrichtung,
- Figur 6: eine perspektivische Teildarstellung einer den Diagrammscheibenbündeln zugeordneten, erfindungsgemäß ausgebildeten Auflage sowie eine der Auflage in Montagestellung zugeordnete, erfindungsgemäß gestaltete Trennmesser-Baugruppe,
- Figur 7: eine perspektivische Rückansicht von Auflage und Trennmesser-Baugruppe gemäß der Darstellung in Figur 7.

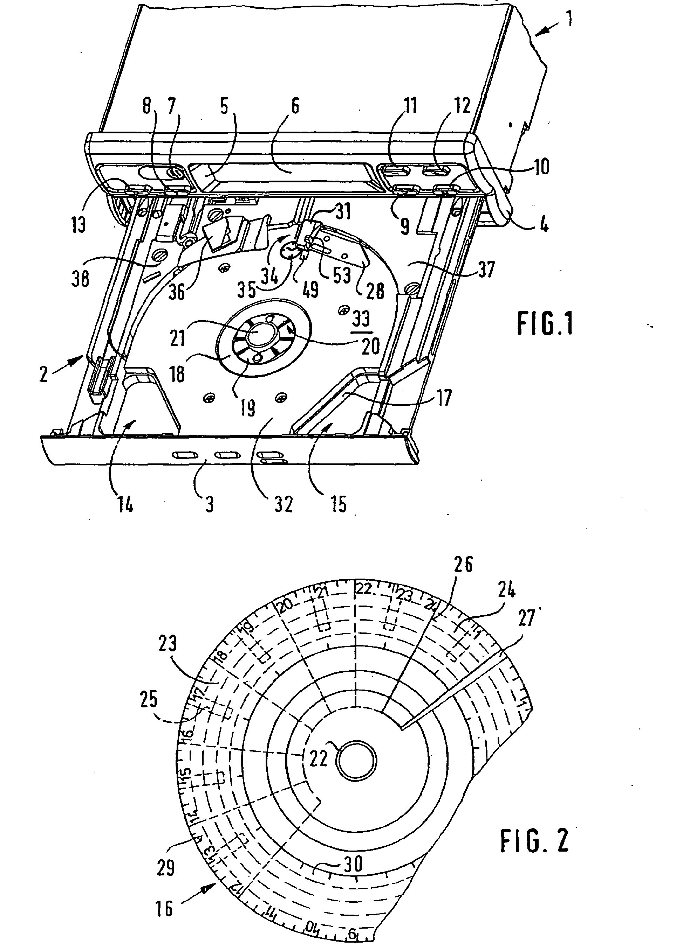

Ein in Figur 1 beispielsweise dargestellter Fahrtschreiber ist als Einbaugerät ausgebildet, und zwar mit einem quaderförmigen Gehäuse 1 und mit einer Schublade 2. Letztere ist in geeigneten Führungsschienen gelagert, die, in Figur 1 nicht sichtbar, im Gehäuse 1 angeordnet sind. Frontseitig ist die Schublade 2 mit einer Blende 3 abgeschlossen, die sich bei geschlossener Schublade 2 harmonisch in eine dem Gehäuse 1 zugeordnete Frontwand 4 einfügt. Ein in der Frontwand 4 vorgesehener Fensterausschnitt 5 macht ein im Gehäuse 1 befestigtes Display 6 sichtbar; mit einer Plombe 7 ist der Zugang zu einer Diagnosebuchse gesichert. Mehrere durch die Frontwand 4 hindurchgreifende Tasten 8, 9, 10, 11, 12 und 13 dienen dem Fahrer und dem Beifahrer zum Anwählen wenigstens der wichtigsten Arbeitszeitdaten bzw. der Menüwahl, dem Vor- und Rückwärtsblättern in den jeweils angewählten Datensätzen sowie dem Freigeben der Schublade 2.

Mit 14 und 15 sind in der Schublade 2 vorgesehene Durchbrüche bezeichnet, welche die Entnahme eines eingelegten Diagrammscheibenbündels 16 (Figur 2) erleichtern. 17 stellt den Boden der Schublade 2 dar. Ein in dem Boden 17 integriertes Laufwerk dient dem uhrzeitrichtigen Antrieb eines Trägers 18, auf welchem ein in die Schublade 2 eingelegtes Diagrammscheibenbündel 16 festgespannt wird. Als Verdrehsicherung dient eine auf dem Träger 18 befestigte ringförmige Wellfeder 19, aus der Mitnahmezacken 20 herausgebogen sind. Ein mit dem Träger 18 ein Teil bildender Zentrierzapfen 21 ist beispielsweise mit einem Gewinde versehen oder es sind nicht dargestellte Nute für eine Renkverbindung ausgebildet. Eine dem Zentrierzapfen 21 zugeordnete Mutter wirkt beim Festspannen des Diagrammscheibenbündels 16 entgegen der Kraftwirkung der Wellfeder 19 auf eine Laufbuchse 22 ein, deren Innendurchmesser dem Aussendurchmesser des Zentrierzapfen 21 entspricht.

Der Vollständigkeit halber sei anhand der Figur 2 verdeutlicht, dass die Laufbuchse 22, auf der die einzelnen Diagrammscheiben des Diagrammscheibenbündels 16 über deren Zentrumsöffnungen gelagert sind, in geeigneter Weise an einer Grundscheibe des Diagrammscheibenbündels 16 befestigt ist. Außerdem ist jede einzelne Diagrammscheibe des Diagrammscheibenbündels 16 - die obenliegende ist mit 23, die nächstfolgende mit 24 bezeichnet - über einen Verbindungsstreifen 25, vorzugsweise einen Papierstreifen, mit der Grundscheibe verbunden. Auch ist jede Diagrammscheibe mit einem Ausschnitt 26 versehen, dessen einer Randbereich 27 angebogen ausgebildet ist, und somit gewährleistet ist, dass ein für das Durchschneiden der Verbindungsstreifen 25 vorgesehenes Trennmesser 28 nach dem Einfallen in den Ausschnitt 26 unter die jeweils obenliegende Diagrammscheibe 23 eingreift. Für ein zeitrichtiges Einlegen der Diagrammscheibenbündel 16 und der uhrzeitrichtigen Zuordnung der Registrierungen auf den Diagrammscheiben sind diese randlich mit einer Zeitskale 29 versehen, die sich in einem mittleren Bereich, beispielsweise im Null-Linienbereich 30 des Geschwindigkeitsregistrierfeldes wiederholt.

Aus der Figur 1 ist ersichtlich, dass das Trennmesser 28 an einem Halter 31 befestigt und letzterer mit einer plattenförmigen die Registrierunterlage bildenden Auflage 32 verbunden ist. Mit 33 ist eine an der Auflage 32 ausgebildete, den umlaufenden Diagrammscheibenbündeln 16 zugeordnete Führungsfläche bezeichnet. 34 stellt eine mit einem Uhrsymbol 35 versehene Markierungslinie dar, die dem uhrzeitrichtigen Einlegen eines Diagrammscheibenbündels 16 dient. Ein Aufbau 36 deckt eine als Einlegekontrolle wirkende Lichtschranke ab. Weitere Abdeckungen 37 und 38 dienen als Staubschutz und Eingriffsicherung bezüglich der in der Schublade 2 flach verteilten Bauelemente des den Träger 18 antreibenden Laufwerkes.

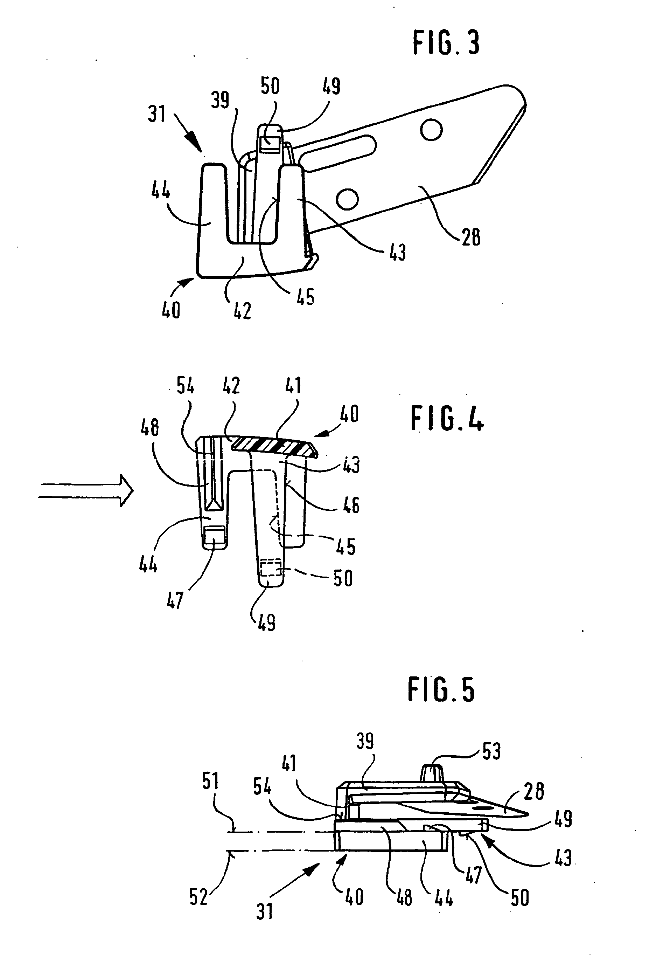

Wie aus den Figuren 3, 4 und 5 ersichtlich ist besteht der Halter 31 aus einem Tragarm 39 und einem Befestigungsschenkel 40 sowie einem den Tragarm 39 und den Befestigungsschenkel 40 verbindenden Steg 41. Bei dem gewählten Ausführungsbeispiel ist das Trennmesser 28 spritzgießtechnisch in den Tragarm 39 eingebettet. Der Befestigungsschenkel 40 wird von zwei über eine Brücke 42 verbundene Lappen 43 und 44 gebildet, wobei an dem einen Lappen 43, dessen Breite im wesentlichen der Höhe der Auflage 32 entspricht, wechselweise Freisparungen 45 und 46 ausgeformt sind und an dem anderen Lappen 44, dessen Breite geringer ist als die Höhe der Auflage 32, eine Rastnase 47 ausgebildet ist. Ferner ist an dem Lappen 44, und zwar in dessen Längsrichtung ein Prisma 48 angeformt. Aus den Figuren 3, 4 und 5 geht außerdem hervor, dass der Lappen 43 in seiner Länge gestuft ausgebildet ist, und dass an der fingerförmigen Verlängerung 49 des Lappens 43 eine zweite gegen die Rastnase 47 weisende Rastnase 50 ausgeformt ist. Kennzeichnend für die Struktur des Befestigungsschenkels 40 ist, dass die Innenseite des Lappens 44 und die am Lappen 43 angebrachten, im einzelnen nicht bezeichneten, parallel zum Tragarm 39 ausgebildeten Flächen der Freisparungen 45 und 46 im wesentlichen in einer Teilungsebene 51 liegen und dass die den Tragarm 39 abgewandten Außenseiten des Lappens 44, der Brücke 42 und des Lappens 43 in einer zur Teilungsebene 51 parallelen Ebene 52 ausgebildet sind. Mit 53 ist ein dem Tragarm 39 zugeordneter Zapfen bezeichnet, der den von einem Diagrammscheibenbündel 16 abgetrennten Diagrammscheiben als Anschlag dient.

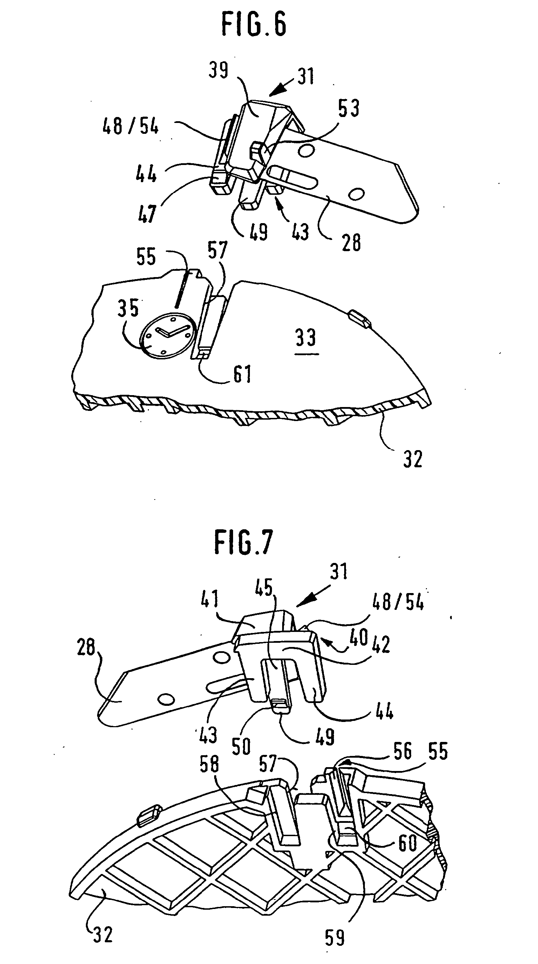

Dem mit 54 bezeichneten First des Prismas 48 ist, wie die Figuren 6 und 7 zeigen, in der Auflage 32 ein Schlitz 55 zugeordnet. Das heißt, bei unterschiedlicher Farbgebung von Auflage 32 und Halter 31 wird die Markierungslinie 34 von dem an der Registrierseite der Auflage 32 sichtbaren First 54 des Prismas 48 gebildet. Das der Markierungslinie 34 zugeordnete Uhrsymbol 35 ist ebenfalls ohne einen zusätzlichen Arbeitsgang formtechnisch herstellbar. Gemäß Figur 7 ist der Schlitz 55 gegen die Rückseite der Auflage 32 zu einer dem Prisma 48 entsprechenden Ausnehmung 56 erweitert. In der Auflage 32 ausgeformte Aussparungen 57, 58 und 59 entsprechen den Lappen 43 und 44. Mit 60 und 61 sind den Rastnasen 47 und 50 zugeordnete Hinterschnitte bezeichnet.

Es sei nochmals hervorgehoben, dass die erfindungsgemäße Verbindungsstruktur eine äußerst einfache Montage durch Zusammenstecken von Auflage und Trennmesser-Baugruppe gestattet, dabei die erforderliche exakte Sitzposition der Trennmesser-Baugruppe erzielt wird und eine Demontage durch die vorgesehenen Rastverbindungen erheblich erschwert ist. Erwähnenswert ist ferner, dass die gewählte Verbindungsstruktur im Gegensatz zu einem ebenfalls denkbaren U-, Doppel-T- oder Schwalbenschwanz-Profil für den Befestigungsschenkel formtechnisch problemlos realisiert werden kann.

## Patentansprüche

1. Halter (31) für ein Trennmesser und Vorkehrungen zum Befestigen des Halters in einem Fahrtschreiber, in welchem für ein abschnittweises, zeitlich ununterbrochenes Registrieren von einem Laufwerk uhrzeitrichtig angetriebene Diagrammscheibenbündel Anwendung finden, in welchem eine Auflage (32) vorgesehen ist, welche als Registrierunterlage dient und in welchem die einzelnen durch Verbindungsstreifen (25) an einer Grundscheibe befestigten Diagrammscheiben (23, 24) nach und nach von dem Diagrammscheibenbündel (16) abgetrennt werden, indem das Trennmesser (28) im Verlauf des Registrierens die Verbindungsstreifen (25) durchschneidet,
**dadurch gekennzeichnet,**
**dass** der Halter (31) aus einem der Befestigung des Trennmessers (28) dienenden Tragarm (39), wenigstens einem im wesentlichen parallel zu dem Tragarm (39) ausgerichteten Befestigungsschenkel (40) und einem Tragarm (39) und Befestigungsschenkel (40) verbindenden Steg (41) gebildet ist,
**dass** der Halter (31) spritzgießtechnisch aus einem Kunststoff hergestellt ist und
**dass** an dem Befestigungsschenkel (40) und an der Auflage (32) einen gegenseitigen Formschluß ermöglichende Strukturen derart ausgebildet sind, dass der Halter (31) mit der Auflage (32) durch ein parallel zur Registrierebene erfolgendes Zusammenfügen verbindbar ist.

2. Halter für ein Trennmesser und Vorkehrungen zum Befestigen des Halters nach Anspruch 1,
**dadurch gekennzeichnet,**
**dass** das Trennmesser (28) spritzgießtechnisch an dem Tragarm (39) befestigt ist.

3. Halter für ein Trennmesser und Vorkehrungen zum Befestigen des Halters nach Anspruch 1,
**dadurch gekennzeichnet,**
**dass** an dem Befestigungsschenkel (40) des Halters (31) und an der Auflage (32) Ausformungen für eine Schwalbenschwanzverbindung zwischen dem Befestigungsschenkel (40) und der Auflage (32) vorgesehen sind.

4. Halter für ein Trennmesser und Vorkehrungen zum Befestigen des Halters nach Anspruch 1,
**dadurch gekennzeichnet,**
**dass** der Befestigungsschenkel (40) einen mit wechselweise angebrachten Freisparungen (45, 46) versehenen Lappen (43) aufweist und
**dass** in der Auflage (32) eine dem Befestigungsschenkel (40) entsprechende Struktur ausgebildet ist derart, dass, wenn der Halter (31) und die Auflage (32) zusammengefügt sind, der Lappen (43) registrierseitig weitgehend in der Auflage (32) versenkt ist.

5. Halter für ein Trennmesser und Vorkehrungen zum Befestigen des Halters nach Anspruch 4,
**dadurch gekennzeichnet,**
**dass** der Lappen (43) in Längsrichtung gestuft ausgebildet ist, dass eine fingerförmige Verlängerung (49) des Lappens (43) mit einer Rastnase (50) versehen ist und
**dass** die Auflage (32) eine der fingerförmigen Verlängerung (49) des Lappens (43) entsprechende Aussparung (57) mit einem der Rastnase (50) zugeordneten Hinterschnitt (61) aufweist.

6. Halter für ein Trennmesser und Vorkehrungen zum Befestigen des Halters nach Anspruch 1,
**dadurch gekennzeichnet,**
**dass** der Befestigungsschenkel (40) aus zwei mit Abstand zueinander ausgebildeten Lappen (43, 44) gebildet ist, wobei der eine Lappen (43) beidseitig und der andere Lappen (44) einseitig der Auflage (32) zugeordnet ist und
**dass** an der Auflage (32) wechselweise Aussparungen (57, 58, 59) für einen formschlüssigen Eingriff der Lappen (43, 44) ausgeformt sind.

7. Halter für ein Trennmesser und Vorkehrungen zum Befestigen des Halters nach Anspruch 6,
**dadurch gekennzeichnet,**
**dass** an den beiden Lappen (43, 44) sich gegenüberstehende Rastnasen (47, 50) ausgebildet sind und
**dass** an der Auflage (32) beidseitig, den Rastnasen (47, 50) zugeordnete Hinterschnitte (60, 61) vorgesehen sind.

8. Halter für ein Trennmesser und Vorkehrungen zum Befestigen des Halters nach Anspruch 6,
**dadurch gekennzeichnet,**
**dass** die beiden Lappen (43, 44) an der der Registrierseite abgewandten Seite der Auflage (32) in die Auflage (32) eingreifen,
**dass** an einem Lappen (44) in dessen Längsrichtung ein Prisma (48) ausgebildet ist und
**dass** das Prisma (48) und eine dem Prisma (48) zugeordnete, in der Auflage (32) ausgebildete Ausnehmung (56) derart ausgeformt sind, dass der First (54) des Prismas (48) registrierseitig sichtbar ist.

## Claims

1. Holder (31) for a cutting blade and provisions for fastening the holder in a tachograph in which, for a section-by-section, temporally uninterrupted recording, tachograph disc bundles driven in a temporally correct manner by a drive mechanism are used, in which a support (32), serving as a recording base, is provided, and in which the individual tachograph discs (23, 24) fastened to a base disc by connecting strips (25) are gradually separated from the tachograph disc bundle (16) by the cutting blade (28) cutting through the connecting strips (25) in the course of the recording,
**characterized**
**in that** the holder (31) is formed of a supporting arm (39) serving for the fastening of the cutting blade (28), at least one fastening member (40) aligned substantially parallel to the supporting arm (39), and a web (41) connecting the supporting arm (39) and the fastening member (40),
**in that** the holder (31) is made of a plastic by injection moulding methods, and
**in that**, on the fastening member (40) and on the support (32), structures allowing a reciprocal form closure are configured such that the holder (31) can be connected to the support (32) by being joined together parallel to the recording plane.

2. Holder for a cutting blade and provisions for fastening the holder according to Claim 1,
**characterized**
**in that** the cutting blade (28) is fastened to the supporting arm (39) by injection moulding methods.

3. Holder for a cutting blade and provisions for fastening the holder according to Claim 1,
**characterized**
**in that** on the fastening member (40) of the holder (31) and on the support (32) shapings are provided for a dovetail connection between the fastening member (40) and the support (32).

4. Holder for a cutting blade and provisions for fastening the holder according to Claim 1,
**characterized**
**in that** the fastening member (40) has a lug (43) provided with alternately placed reliefs (45, 46), and
**in that** in the support (32) a structure corresponding to the fastening member (40) is configured such that, when the holder (31) and the support (32) are joined together, the lug (43), on the recording side, is largely buried in the support (32).

5. Holder for a cutting blade and provisions for fastening the holder according to Claim 4,
**characterized**
**in that** the lug (43) is configured such that it is stepped in the longitudinal direction,
**in that** a finger-shaped extension (49) of the lug (43) is provided with a latching boss (50), and
**in that** the support (32) has a cavity (57) corresponding to the finger-shaped extension (49) of the lug (43) and having an undercut (61) assigned to the latching boss (50).

6. Holder for a cutting blade and provisions for fastening the holder according to Claim 1,
**characterized**
**in that** the fastening member (40) is formed of two mutually spaced lugs (43, 44), one lug (43) being assigned on both sides and the other lug (44) on one side of the support (32), and
**in that** on the support (32) alternate cavities (57, 58, 59) are shaped for a positive-locking engagement of the lugs (43, 44).

7. Holder for a cutting blade and provisions for fastening the holder according to Claim 6,
**characterized**
**in that** mutually opposing latching bosses (47, 50) are configured on the two lugs (43, 44), and
**in that** undercuts (60, 61) assigned to the latching bosses (47, 50) are provided on both sides of the support (32).

8. Holder for a cutting blade and provisions for fastening the holder according to Claim 6,
**characterized**
**in that** the two lugs (43, 44) engage in the support (32) on that side of the support (32) which is facing away from the recording side,
**in that** on one lug (44), in the longitudinal direction thereof, a prism (48) is configured, and
**in that** the prism (48) and a recess (56) assigned to the prism (48) and configured in the support (32) are shaped such that the ridge (54) of the prism (48) is visible on the recording side.

## Revendications

1. Support (31) pour un couteau de sectionnement et moyens permettant de fixer le support dans un tachygraphe, dans lequel on utilise des liasses de disques d'enregistrement entraînées en synchronisation avec l'heure actuelle par un mécanisme d'entraînement en vue d'un enregistrement ininterrompu dans le temps, section par section, dans lequel il est prévu une surface d'appui (32) qui sert de coussin pour l'enregistrement et dans lequel les différents disques d'enregistrement (23, 24) fixés sur un disque de base par des rubans de liaison (25), sont détachés l'un après l'autre de la liasse (16) de disques d'enregistrement par le fait que le couteau de sectionnement (28) sectionne les rubans de liaison (25) au cours de l'enregistrement,
**caractérisé par le fait**
**que** le support (31) est formé par une console (39) servant à la fixation du couteau de sectionnement (28), par au moins une traverse de fixation (40) orientée, pour l'essentiel, parallèlement à la console (39) et par une barre (41) reliant la console (39) et la traverse de fixation (40),
**que** le support (31) est fabriqué en matière plastique en moulage par injection et
**que**, sur la traverse de fixation (40) et sur la surface d'appui (32), des structures permettant un assemblage géométrique réciproque sont ménagées de manière telle que le support (31) est lié à la surface d'appui (32) par un assemblage se faisant parallèlement au plan d'enregistrement.

2. Support pour un couteau de sectionnement et moyens permettant de fixer le support selon la revendication 1,
**caractérisé par le fait**
**que** le couteau de sectionnement (28) est fixé à la console (39) dans le cadre du moulage par injection.

3. Support pour un couteau de sectionnement et moyens permettant de fixer le support selon la revendication 1,
**caractérisé par le fait**
**que**, sur la traverse de fixation (40) du support (31) et sur la surface d'appui (32), sont prévus des aménagements pour un assemblage à queue d'hirondelle entre la traverse de fixation (40) et la surface d'appui (32).

4. Support pour un couteau de sectionnement et moyens permettant de fixer le support selon la revendication 1,
**caractérisé par le fait**
**que** la traverse de fixation (40) comporte une patte (43) dotée d'évidements (45, 46) ménagés en alternance et
**que**, dans la surface d'appui (32), une structure correspondant à la traverse de fixation (40) est formée de manière telle que, lorsque le support (31) et la surface d'appui (32) sont assemblés, la patte (43) est, côté enregistrement, largement noyée dans la surface d'appui (32).

5. Support pour un couteau de sectionnement et moyens permettant de fixer le support selon la revendication 4,
**caractérisé par le fait**
**que** la patte (43) est étagée dans le sens longitudinal,
**qu'**une prolongation (49) en forme de doigt de la patte (43) est dotée d'un bec d'arrêt (50) et
**que** la surface d'appui (32) comporte un évidement (57) correspondant à la prolongation (49) en forme de doigt de la patte (43) avec une découpe (61) correspondant au bec d'arrêt (50).

6. Support pour un couteau de sectionnement et moyens permettant de fixer le support selon la revendication 1,
**caractérisé par le fait**
**que** la traverse de fixation (40) est formée par deux pattes (43, 44) ayant un certain écartement l'une par rapport à l'autre, l'une des pattes (43) correspondant à la surface d'appui (32) des deux côtés et l'autre patte (44), d'un côté, et
**que**, sur la surface d'appui (32), des évidements (57, 58, 59) sont ménagés en alternance pour une insertion des pattes (43, 44) en assemblage géométrique.

7. Support pour un couteau de sectionnement et moyens permettant de fixer le support selon la revendication 6,
**caractérisé par le fait**
**que**, sur les deux pattes (43, 44), sont ménagés des becs d'arrêt (47, 50) se faisant face, et
**que**, sur la surface d'appui (32), il est prévu des deux côtés des découpes (60, 61) correspondant aux becs d'arrêt (47, 50).

8. Support pour un couteau de sectionnement et moyens permettant de fixer le support selon la revendication 6,
**caractérisé par le fait**
**que** les deux pattes (43, 44) s'insèrent dans la surface d'appui (32) sur le côté de la surface d'appui (32) opposé à la face d'enregistrement,
**qu'**un prisme (48) est formé sur une patte (44) dans son sens longitudinal et
**que** le prisme (48) et un évidement (56) correspondant au prisme (48) et ménagé dans la surface d'appui (32) sont formés de manière telle que l'arête supérieure (54) du prisme (48) est visible du côté enregistrement.
